# EUROPEAN PATENT SPECIFICATION

(11) **EP 3 693 153 B1**
(45) Date of publication and mention of the grant of the patent: **22.03.2023**
(21) Application number: 20165888.7
(22) Date of filing: 19.09.2017
(51) Int. Cl.: B29C 64/205, B28B 1/00, B33Y 10/00, B33Y 30/00, B29C 64/10, B22F 12/50, B33Y 40/00, B22F 10/28, B22F 3/105, B22F 10/40, B22F 12/00

(54) **APPLICATION UNIT**
AUFTRAGSEINHEIT
UNITÉ D'APPLICATION

(43) Date of publication of application: 12.08.2020
(62) Divisional of application: 17191959.0
(73) Proprietor: CL Schutzrechtsverwaltungs GmbH, 96215 Lichtenfels (DE)
(72) Inventor: Schödel, Frank, 96317 Kronach (DE); Eichenberg, Boris, 96215 Lichtenfels (DE); Pontiller-Schymura, Peter, 95512 Neudrossenfeld (DE)
(74) Representative: Hafner & Kohl PartmbB

(56) References cited:
- WO-A1-2004/037469
- WO-A2-97/37523
- US-A1- 2016 339 542

## Description

The invention relates to an application unit for an apparatus for additively manufacturing of three-dimensional objects by means of successive irradiation and consolidation of layers of a build material which can be consolidated by means of an energy beam, which application unit is adapted to apply build material onto a build plane and/or a previously applied layer of build material, wherein the application unit is adapted to selectively apply build material onto at least one application region of the build plane or of the previously applied layer.

Such apparatuses for additively manufacturing of three-dimensional objects are well known in prior art. Respective apparatuses typically comprise at least one irradiation device that is adapted to generate an energy beam, e.g. a laser beam or an electron beam, to irradiate and thereby consolidate a build material. Generally, after an irradiation process step, i.e. the irradiation of a build material layer, is finished, at least one fresh layer of build material is applied onto the previously consolidated layer.

The fresh build material is typically distributed in a build plane, i.e. a plane in which a surface of build material is arranged that can be directly irradiated via the energy beam. For example, the current uppermost layer of build material that is applied onto a build plate, i.e. a carrier device carrying non-consolidated build material and the part of the object that is already built, or that is applied onto the part of the object that is already built, may be regarded as build plane. Thus, it is possible to apply build material to a previously consolidated layer of build material as well as applying fresh build material onto a layer of non-consolidated build material, e.g. when applying multiple layers of fresh build material.

To distribute the fresh build material in the build plane several approaches are known. The respective application unit may comprise an application element, in particular a rake-like application element, with which build material is conveyed and evenly distributed in the build plane. According to this approach, build material is evenly distributed over the entire build plane, wherein in regions that are not irradiated (and not consolidated) via the energy beam, non-consolidated build material remains that is wasted or has to be recycled. Dependent on the occupancy rate of the build plane, i.e. the ratio between the part of the area of the build plane that is effectively used (in which build material is irradiated) and the entire available area of the build plane, the amount of non-consolidated build material may be significant.

According to another approach, an application unit may be provided that is adapted to selectively apply build material, wherein the application unit comprises a build material dispenser adapted to dispense build material selectively in areas of the build plane in which build material has to be applied and irradiated. The selective application according to this approach requires special treatment of the build material, since a trickling of build material has to be avoided to assure that build material is selectively applied only to the desired regions. The document US 2016 / 339 542 A1 discloses a rapid prototyping device utilizing an electrophotographic imaging drum for transferring electro-statically charged manufacturing material to a manufacturing base.

It is an object to the present invention to provide an application unit, wherein the selective application of build material is improved.

The object is inventively achieved by an apparatus according to claim 1 and a method in accordance to claim 13.

Advantageous embodiments of the invention are subject to the dependent claims.

The application unit described herein is an application unit for an apparatus for additively manufacturing three-dimensional objects, e.g. technical components, by means of successive layerwise selective irradiation and consolidation of layers of a powdered build material ("build material") which can be consolidated by means of an energy beam. A respective build material can be a metal, ceramic or polymer powder. A respective energy beam can be a laser beam or an electronic beam. A respective apparatus can be a selective laser sintering apparatus, a selective laser melting apparatus or a selective electron beam melting apparatus, for instance.

The apparatus may comprise a number of functional units which are used during its operation. Functional units that the apparatus comprises are a process chamber, and an irradiation device which is adapted to selectively irradiate a build material layer disposed in the process chamber with at least one energy beam. An exemplary functional unit is a stream generating device which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

The invention is based on the idea that at least one application element is provided that is adapted to transfer build material previously applied onto an application surface of the application element to the application region, wherein an adhesion unit is provided that is adapted to adjust an adhesion ability for build material of the application surface of the application element and/or an adhesion ability of the build material, at least in part by generating a suction stream or a vacuum applied in the region of the application surface (9) of the application element.

The application unit comprises at least one application element with an application surface on which a build material can be applied. The application element is subsequently used to transfer the build material applied onto the application surface to the application region, in particular onto the build plane (e.g. the build plate or a previously built layer of build material). Thus, the build material applied onto the application surface may be transferred to the application region by contacting (pressing) the corresponding part of the application surface build material has been applied on onto the application region. To ensure the selective application of build material, and adhesion ability for build material of the application surface of the application element can be adjusted. In other words, the property of the application surface that build material can adhere to the application surface can be adjusted to form regions on the application surface with different adhesion ability for build material. This enables forming region on the application surface on which build material can be applied (or remains applied).

For example, the adhesion ability in at least one region of the application surface can be adjusted in that build material can adhere and/or at least one region of the application surface can be adjusted in that build material cannot adhere. Thus, a selective adhesion of build material on the application surface of the application element is possible, wherein build material can selectively be adhered to the application element corresponding to the intended distribution of build material in the application region. Hence, the desired distribution or configuration of build material to be applied on the build plane as (at least part of) the next layer of build material, can selectively adhere on the application surface of the application element and can subsequently be transferred from the application element to the application region.

The application region in the scope of this application refers to the region to which the build material has to be applied, e.g. a region of the build plane, in particular the build plate or a previously built layer of build material, in particular the next layer of the object to be built. Build material applied on the build plane in the scope of this application can directly be irradiated via the at least one energy beam.

Primarily, the application region corresponds to a region in which build material is to be irradiated. For example, the application region may correspond to an individual layer of the object to be manufactured. Of course, regions for structures other than the object to be manufactured that are required in the manufacturing process, such as support structures that are also to be irradiated via the energy beam, are also referred to as application region, since build material has to be applied an irradiated to form the respective structures. Thus, build material may selectively be applied only to regions that are subsequently irradiated by the energy beam to ensure that remaining non-consolidated build material can be reduced or avoided. Besides, build material may also be applied to regions surrounding the regions as described before, for example to generate a "powder bed" surrounding the object and/or structure to be irradiated, wherein the "powder bed" provides additional manufacturing possibilities. Further, build material may be applied to an application region corresponding to any other arbitrary region, as well.

According to a first embodiment of the application unit, the adhesion unit may be adapted to selectively increase, in particular to generate, the adhesion ability of the application surface of the application element and/or to selectively decrease, in particular remove, the adhesion ability of the application surface of the application element. As described before, the adhesion ability of the application surface of the application element can be adjusted to provide the possibility to only selectively adhere build material to the application element.

In a first alternative, the adhesion ability of the application surface may be selectively increased, in that build material can adhere to the respective regions of the application surface the adhesion ability has been increased in. In particular, the adhesion unit may generate a (significant) adhesion ability, in that the application surface of the application element as such does not have significant adhesion ability for the build material used in the manufacturing process. Thus, regions of the application surface that have not been affected by the adhesion unit cannot bind or adsorb build material, but only regions of the application surface that are affected or in which the adhesion ability has been adjusted, in particular increased, via the adhesion unit, can bind or adsorb build material (or build material can adsorb to those regions, respectively).

According to the second alternative of the embodiment described before, the adhesion ability of the application surface may be selectively decreased, in that build material cannot adhere to the respective regions of the application surface the adhesion ability has been decreased in. In particular, the adhesion unit may (essentially) remove any adhesion ability from the respective regions of the application surface, in that the application surface of the application element does not conserve any (significant) adhesion ability for build material in regions that have been affected by the adhesion unit. Thus, regions of the application surface the adhesion unit has been used on cannot bind or adsorb build material, but only regions of the application surface that have not been affected or in which the adhesion ability has not been adjusted, in particular removed, via the adhesion unit, can bind or adsorb build material (or build material can adsorb to those regions, respectively).

For example, dependent on the (at least one part of) the next layer of build material that has to be applied onto the build plane, the adhesion unit may adjust the adhesion ability of the application surface in that build material sticks to or is removed from the application surface according to the shape of the next layer of build material to be applied. An arbitrary combination of the first alternative and the second alternative, for example via two adhesion units with different effect mechanisms, is feasible.

The application unit can be improved in that the adhesion unit may be adapted to selectively increase the adhesion ability of the application surface of the application element in at least one transfer region of the application element corresponding to the application region. According to this embodiment, the adhesion unit is used to selectively increase the adhesion ability of the application surface in that a pattern of build material that adheres to the application surface corresponds to the pattern of build material to be applied to the application region.

For example, the adhesion unit can adjust the adhesion ability for build material of the application surface of the application element before the application element comes in contact with build material. Thus, build material contacting the application surface after the adhesion unit adjusted the adhesion ability of the application surface can only stick to or adhere, respectively, to the regions the adhesion ability has been increased in. This allows for a selective adhesion and a selective application of build material onto the application element. As the application element is used to transfer the build material applied to the application surface, a selective application of build material to the application region is enabled. Of course, if the application region is larger than the application surface, the application region may be subdivided into at least two parts that can be combined to form the application region, wherein the at least two parts can be applied to the application region, e.g. subsequently.

According to another embodiment of the application unit, the adhesion unit may be adapted to selectively decrease the adhesion ability of the application surface of the application element in at least one complementary region of the application element complementary to the application region. Therefore, the adhesion unit may affect the application surface of the application element before the application surface comes in contact with the build material. Due to the effect of the adhesion unit on the application surface, build material only can stick to or adhere, respectively, to the regions that have not been affected by the adhesion unit. In other words, the adhesion unit selectively decreases the adhesion ability of the application surface, wherein build material cannot stick to the regions the adhesion unit has adjusted the adhesion ability in.

Thus, the application element according to this embodiment provides significant adhesion ability that can selectively be decreased via the adhesion unit. It is also possible that build material is applied to the entire application surface of the application element, wherein after the build material has been applied to the application surface, the adhesion unit is used to selectively decrease the adhesion ability of the application surface, wherein build material remains adhered to the application surface in regions that have not been affected by the adhesion unit. The adhesion unit may therefore, be used to selectively decrease the adhesion ability of the application surface in regions complementary to the structure of (at least part of) the next layer to be applied to the application region. Hence, the adhesion unit affects the application surface in that the affected regions form a "negative" of the application region (or at least a part thereof). The regions not affected by the adhesion unit, in which build material sticks to the application surface (or remains adhered to the same) correspond to (at least one part of) the application region.

Further, the adhesion ability may be passively adjustable, in particular via a contact pressure and/or a residual heat of a previously irradiated layer of build material. Therefore, the adhesion ability of the application surface may be adjusted passively, wherein, in particular no further means for adjusting the adhesion ability may be necessary. For example, the adhesion ability may be changed due to a variation of the force or pressure applied on the build material that is adhered to the application surface. Thus, the build material adhered to the application surface can be transferred to the application region, wherein the layer of build material adhered to the application surface is transferred to the application region, e.g. detached or removed from the application surface and thereby applied to the application region. The detachment or removal of build material adhered to the application surface may be performed or at least supported by applying a defined force or a defined pressure onto the adhered build material and/or by inducing thermal energy and thereby weakening or loosening the adhesion of build material on the application surface.

For example, the adhesion ability for build material of the application surface may be weakened or removed by moving the application element under a defined force against the application region or generating a defined pressure onto the application region in that the adhered build material can be removed. Further, the thermal energy of the layer of build material in the application region that has previously been irradiated (and consolidated) can be used to weaken or loosen the bond of build material adhered to the application surface.

Additionally or alternatively, the adhesion unit may be adapted to adjust the adhesion ability actively, in particular via charging and/or magnetizing and/or bonding and/or heating. In other words, the adhesion unit may actively change or adjust the adhesion ability of the application surface of the application element and/or the build material. In particular, at least one means for actively adjusting the adhesion ability may be provided.

For example, a charging device adapted to selectively charge the application surface in that build material only selectively can adhere to the application surface. Preferably, a corresponding build material is used that can be selectively adhered by selectively adjusting the electric charge of the application surface. It is also possible to have the adhesion unit selectively magnetize (or demagnetize) the application surface and/or the build material, in that the adhesion ability for build material is changed in the respective affected regions.

Another way to actively adjust the adhesion ability is bonding of build material onto the application surface, for example using an adhesive, in particular an UV-hardening adhesive. Thus, a respective bonding material, e.g. an adhesive, may be applied to the application surface in regions build material shall be adhered to or alternatively, bonding material, e.g. an adhesive, may be applied to the whole application surface, wherein in regions of the application surface in which no build material shall adhere, the bonding material can be hardened before the application surface has contact to the build material. By doing so, build material cannot adhere to the regions in which the bonding material has already been hardened but only to regions in which the bonding material has not been hardened. The hardening of the adhesive can preferably be performed by heating and/or radiation, in particular UV-radiation, e.g. a UV-laser beam. Besides, the adhesion unit may comprise respective means for adjusting the adhesion ability of the application surface and/or of the build material thermally and/or chemically.

Also, the active adjustment (e.g. via charging, tempering, etc.) of the adhesion ability may be performed in that the adhesion ability for build material of the regions of the application surface affected by the adhesion unit (or the build material) can be increased or decreased, in particular generated or removed.

The adhesion unit is adapted to adjust an adhesion ability for build material of the application surface of the application element by generating a suction stream or a vacuum applied in the region of the application surface of the application element. Hence, build material may be temporarily adhered to the application surface of the application element by a suction stream or a vacuum applied in the region of the application surface of the application element. The application surface of the application element may be provided with openings, e.g. arranged in an array or the like, so that the suction stream or vacuum, respectively may interact with the build material so that the build material may adhere to the application surface. The suction stream or vacuum, respective is generated by a suction stream generating unit, e.g. a suction pump, or a vacuum generating unit, e.g. a vacuum pump, assigned to the adhesion unit. Operation of a respective a suction stream generating unit or vacuum generating unit, respectively and respective operational parameters, particularly operational parameters which influence the adhesion generated by the suction stream or vacuum, respectively can be controlled by a control unit of the suction stream generating unit or vacuum generating unit, respectively.

Preferably, the at least one application region may essentially equal the cross section of the respective layer of the object to be built and/or the cross section of the respective layer of at least one support structure, in particular a wall or a support element. As described before, the application region preferably corresponds to a region of the build plane in which build material is to be irradiated and regions for structures other than the object to be manufactured, such as support structures, are also referred to as application region. Besides, build material may also be applied to regions surrounding the regions as described before, for example to generate a support or a "powder bed" surrounding the object and/or structure to be irradiated, wherein the support or "powder bed" is built from non-consolidated build material and provides additional manufacturing possibilities. In other words, the application region may also comprise an area around a region that is to be directly irradiated by the energy beam.

According to another embodiment of the application unit, the application element may have a plate-like shape or a rotational symmetric shape and/or may be built as a roller, in particular as a cylindrical roller. The application element therefore, may have a rotational symmetric shape, for example a drum, and/or the application element may be built as a roller, wherein build material can be applied onto an application surface of the application element and subsequently be transferred from the application surface onto the application region, as described before. The application surface of the application element may, at least partly, be formed by the shell surface of the application element, in particular the shell surface of the cylindrical roller or drum. Alternatively, the application element may have a plate-like shape, wherein build material may be selectively applied onto the application surface of the application element, in particular a section of a plate, and subsequently stamped onto the application region. The application surface may be arranged on a bottom side of the plate-like application element or the application element may be turned in advance to the transfer of build material onto the application region. In particular, the application element may comprise a plate onto which partially, e.g. onto at least a part of the bottom side, build material is applied. Subsequently the plate may be used as a stamp in that the build material is transferred, e.g. under pressure, to the application region.

Advantageously, using a rotational symmetric application element, for example a cylindrical roller, enables a continuous application of build material, wherein the application element can be set into rotation, wherein build material can be selectively applied onto the application surface of the application element and continuously transferred from the application surface of the application element to the application region.

The movement direction or the application direction can be chosen in an arbitrary manner. For example, the object to be built, in particular the build plane (e.g. the build plate carrying the object) can be moved relative to the application unit and/or the application unit can be moved relative to the object to be built. The movement of the application unit relative to the object to be built can, for example, be performed in X- and/or Y-direction, which may be defined essentially parallel to at least one edge of a build plate. Further, a change of the movement direction during an application step or between two application steps is also possible. Thus, the application element may be turned around a (major) axis during or between two application steps. Therefore, application steps may be performed in different application directions, e.g. one application step may be performed in a first application direction and a succeeding application step may be performed in a different application direction, e.g. perpendicular to the first application direction.

The application element may further be adapted to selectively apply build material via a rollover movement of the application element, wherein the application element is moveable relative to the build plane and/or a previously applied layer of build material in that the rollover movement is provided. The application element may be pivoted in that the application element can perform a rollover movement relative to the build plane and/or a previously applied layer of build material. As described before, due to the rollover movement it is possible to apply build material onto the application surface of the application element and simultaneously transfer the build material previously applied on the application surface to the application region with another part of the circumference of the application element.

Thus, build material is applied onto the application surface in a first part of the circumference of the application element, wherein the application element is moved in a rollover movement. Due to the rollover movement, the application surface and together with the application surface (shell surface) the previously applied build material rotates around the rotational axis of the application element. Thus, the previously applied build material comes in contact with the application region, typically but not necessarily arranged below the application element. In other words, the application element can be rolled over the build plane and/or the previously applied layer of build material similar to a paint roller, thereby applying the previously and selectively applied layer of build material onto the application region.

According to another embodiment of the application unit, a build material supply unit may be provided, which build material supply unit is adapted to apply build material onto the application element, in particular by supplying build material directly contacting the application surface of the application element. Thus, the build material supply unit is used to bring non-consolidated build material in contact with the application surface that has previously been treated via the adhesion unit and/or is to be treated via the adhesion unit dependent on the effect mechanism of the adhesion unit. For example, the build material supply unit may be arranged above the application element, wherein build material is guided onto the application surface, e.g. due to gravity. Thus, build material is applied onto the application surface due to the adhesion ability of the application surface.

The application unit as described before can further be improved in that the application element is movably, in particular rotatably, arranged with respect to the build material supply unit. Due to the induced rollover movement of the application element, build material can be supplied and applied onto the application surface moving relative to the build material supply unit. After the build material has been applied onto the application surface the respective applied layer of build material comes in contact with the application region, where the build material is depleted and applied onto the application region. The respective region of the application surface then again comes in contact with the build material supply unit again receiving fresh build material that is selectively applied onto the application surface. Hence, a continuous application process is feasible.

A layer thickness of applied layers of build material may be adjusted dependent on an application parameter, in particular corresponding to a contact pressure between the application element and the application region or the build material supply unit and/or corresponding to a rotational speed of the application element. By adjusting respective application parameters the resulting layer thickness of build material on the application surface and in the application region is possible. Thus, a contact pressure can be varied between the application element and the build material supply unit, when build material is applied onto the application surface of the application element. Also, the contact pressure between the application element and the application region while depleting the build material to the application region can be varied.

The build material supply unit and the application element may be formed as a combined module. Preferably, the application element and the build material supply unit and the adhesion unit form a combined module.

Further, a conditioning unit may be provided that is adapted to condition, in particular to clean, the application unit, in particular the application element. The conditioning unit is used to restore the initial condition of the application element, in particular the application surface of the application element. The conditioning unit may be used to clean the application surface, for example remove build material that still sticks to the application surface after the transfer of build material to the application region. The conditioning unit may further be used to prepare the application surface before it is treated with the adhesion unit, for example, restore the application surface to a defined condition. Hence, various parameters of the application surface may be adjusted via the conditioning unit, for example an electric charge and/or the application surface may be (de)magnetized and/or at least one surface condition can be restored and/or residues remaining from the previously performed application step may be removed, e.g. adhesive residues.

Besides, the invention relates to an apparatus for additively manufacturing of three-dimensional objects by means of successive irradiation and consolidation of layers of a build material which can be consolidated by means of an energy beam, which apparatus comprises at least one application unit adapted to apply build material onto a build plane and/or a previously applied layer of build material, wherein the application unit is adapted to selectively apply build material onto at least one application region of the build plane or of the previously applied layer, wherein at least one application element adapted to transfer build material previously applied onto an application surface of the application element to the application region, wherein an adhesion unit is provided that is adapted to adjust an adhesion ability for build material of the application surface of the application element and/or an adhesion ability of the build material.

Further, the invention relates to a method for operating an apparatus for additively manufacturing of three-dimensional objects by means of successive irradiation and consolidation of layers of a build material which can be consolidated by means of an energy beam, wherein build material is selectively applied onto at least one application region of a build plane or of a previously applied layer, wherein an adhesion ability for build material of the application surface of the application element and/or an adhesion ability of the build material is adjusted.

Self-evidently, all features, details and advantages described with respect to the inventive application unit are fully transferable to the inventive apparatus and the inventive method. Particularly, the inventive method may be performed on the inventive apparatus and/or using the inventive application unit.

Exemplary embodiments of the invention are described with reference to the Fig. The Fig. are schematic diagrams, wherein
Fig. 1 shows an inventive apparatus according to a first embodiment of the invention;
Fig. 2 shows a top view of the inventive apparatus of Fig. 1;
Fig. 3 shows an inventive apparatus according to a second embodiment of the invention; and
Fig. 4 shows an inventive apparatus according to a third embodiment of the invention.

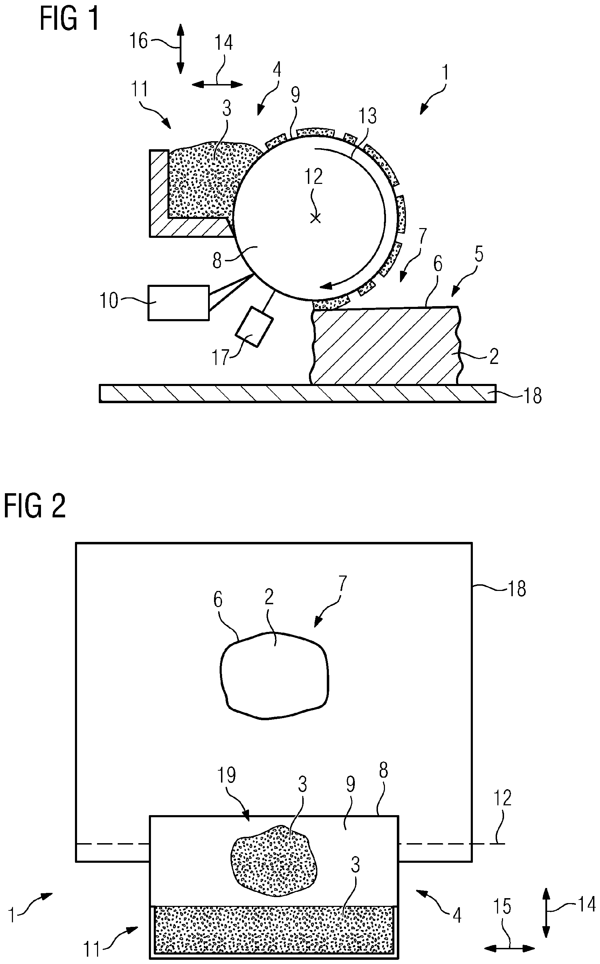

Fig. 1 shows an apparatus 1 for additively manufacturing three-dimensional objects 2 by means of successive irradiation and consolidation of layers of a (non-consolidated) build material 3 which can be consolidated by means of an energy beam (not shown). The apparatus 1 comprises an application unit 4 that is adapted to apply the build material 3 onto a build plane 5 and/or a previously applied layer 6 of build material 3.

The application unit 4 is adapted to selectively apply the non-consolidated build material 3 onto an application region 7 of the build plane 5 (according to this embodiment the build plane 5 coincides with the previously built layer 6). The application unit 4 further comprises an application element 8 comprising an application surface 9 which is basically the shell surface of the application element 8 that is, for example, built as a cylindrical roller or drum. Thus, build material 3 may be applied to the application surface 9 of the application element 8 and subsequently be transferred to the application region 7 of the build plane 5.

In other words, non-consolidated build material 3 can be selectively applied onto the application surface 9 that is the shell surface of the application element 8 and be depleted onto the top layer 6 of the previously built object 2. To selectively apply the build material 3 onto the application surface 9 the application unit 4 comprises an adhesion unit 10 that is adapted to adjust an adhesion ability for build material 3 of the application surface 9 of the application element 8. It is also possible that the adhesion unit 10 is adapted to adjust an adhesion ability of the build material 3.

According to this embodiment of the invention, the adhesion unit 10 is adapted to change the electric charge of the application surface 9 by generating an energy beam 11, for example a laser beam, and guide the generated energy beam 11 selectively over the application surface 9 to adjust the adhesion ability for build material 3 of the application surface 9 in different regions of the application surface 9. The generated energy beam 11 that has been generated by the adhesion unit 10 must not be confused with the energy beam (not shown) generated by an irradiation device (not shown) of the apparatus 1 which is used to irradiate and consolidate the build material in the build plane 5.

The application unit 4 further comprises a build material supply unit 11 that supplies build material 3 to the application element 8. In particular, the build material supply unit 11 brings build material 3 in direct contact with the application surface 9, in particular a part of the application surface 9 that has already been treated via the adhesion unit 10. Dependent on the adjustment of the adhesion ability the adhesion unit 10 has performed, build material 3 selectively adheres to the application surface 9 of the application element 8. In other words, the adhesion unit 10 increases (decreases) the adhesion ability for build material 3 of the application surface 9 in at least one region of the application surface 9 that corresponds (is complementary) to the next layer of build material 3 that has to be applied onto the previously built layer 6 of the object 2. Thus, build material 3 can only (cannot) adhere to the regions treated by the adhesion unit 10.

The application element 8 is pivoted and rotatably mounted about a rotational axis 12. Thus, the application element 8 is rotatably movable (as depicted by an arrow 13). The application unit 4 is translatory movable in X-, Y- and Z-direction (indicated by arrows 14 - 16). Thus, due to the rollover movement of the application element 8 build material 3 that adheres to the application surface 9 can be depleted onto the top layer 6 of the previously built object 2, i.e. in the application region 7.

The application unit 4 further comprises a conditioning unit 17 used to restore the initial condition of the application element 8, in particular the application surface 9 of the application element 8. The conditioning unit 17 is used to clean the application surface 9, for example by removing build material 3 that still sticks to the application surface 9 after the transfer of build material 3 to the application region 7. The conditioning unit 17 is further used to prepare the application surface 9 before it is again treated with the adhesion unit 10, for example, the conditioning unit 17 restores the electric charge status of the application surface 9 to an initial condition, e.g. to "uncharged".

The application unit 4 is built as a combined module, wherein the application element 8, the adhesion unit 10, the build material supply unit 11 and the conditioning unit 17 form a combined module that is laterally movable (depicted by arrows 14 - 16) with respect to a build plate 18 carrying the previously built object 2.

Fig. 2 shows the apparatus 1 of Fig. 1 in a top view. As can be derived from Fig. 2, the adhesion unit 10 adjusts the adhesion ability of the application surface 9 in that build material 3 only adheres in a transfer region 19, in which the adhesion unit 10 increased the adhesion ability for build material 3 of the application unit 9. To deplete the adhered build material 3 the application unit 4 can be moved laterally (depicted by the arrows 14 - 16) to bring the build material 3 arranged in the transfer region 19 in contact with the application region 7, i.e. onto the top layer 6 of the object 2.

By using the residual heat of the previously built layer 6, the build material 3 arranged in the transfer region 19 is detached from the application surface 9, as the residual heat thermally weakens the adhesion ability of the respective transfer region 19 of the application surface 9. Additionally, the application unit 4, in particular the transfer region 19 may be pressed onto the top layer 6 to apply a defined pressure in that the build material 3 arranged in the transfer region 19 is applied onto the top layer 6 or the application region 7, respectively.

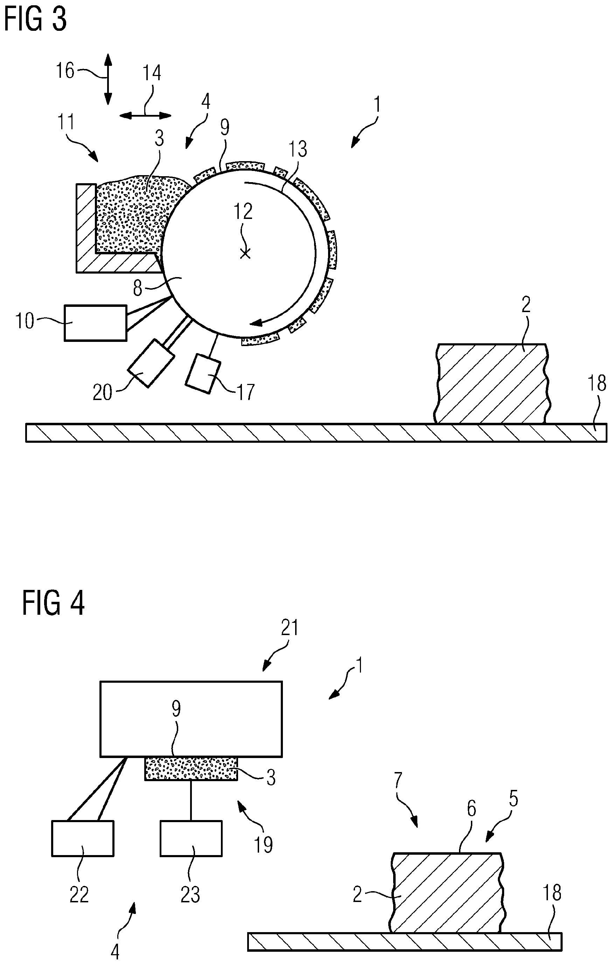

Fig. 3 shows an inventive apparatus 1 according to a second embodiment of the invention. The general set up according to the apparatus 1 depicted in Fig. 3 is analog to the first embodiment of the inventive apparatus 1 as depicted in the Fig. 1, 2. Thus, the same reference signs are used for the same parts.

Deviant from the apparatus 1 depicted in Fig. 1, 2, the apparatus 1 as shown in Fig. 3 comprises an adhesion unit 10 that is adapted to selectively decrease the adhesion ability of the application surface 9 of the application element 8. The application unit 4 further comprises a second adhesion unit 20 that is adapted to uniformly change the adhesion ability of the application surface 9 as it passes the second adhesion unit 20, for example, adapted to uniformly increase or decrease the adhesion ability of the application surface 9. Subsequently, the adhesion unit 10 is used to change the adhesion ability for build material 3 of the application surface 9.

For example, the second adhesion unit 20 uniformly increases the adhesion ability for build material 3 of the entire application surface 9 as it passes the second adhesion unit 20. Subsequently when passing the adhesion unit 10, the adhesion unit 10 selectively decreases the adhesion ability for build material 3 of the application unit 9 in regions complementary to the transfer region 19 (the region in which build material 3 is desired). Build material 3 can therefore, adhere to the transfer region 19, ash the adhesion unit 20 uniformly increased the adhesion ability but build material cannot adhere to the complementary region, since the adhesion ability was again decreased by the adhesion unit 10.

Thus, the basic function of the application unit 4 or the inventive apparatus 1 depicted in Fig. 3 follows the principle as described with respect to the Fig. 1 and 2.

Fig. 4 shows an inventive apparatus 1 according to a second embodiment of the invention. Deviant from the apparatus 1 depicted in Fig. 1 - 3 the apparatus 1 as shown in Fig. 4 comprises an adhesion unit 22 that is adapted to selectively increase or decrease the adhesion ability of the application surface 9 of the application element 21. The application element 21 is built as a plate, wherein build material 3 is applied onto a bottom side of the application element 21. In other words, the application surface 9 is located bottom sides of the plate-like application element 21. To apply build material 3 onto the application surface 9 a build material supply unit 23 is provided that is adapted to selectively apply build material to a transfer region 19 of the application surface 9.

The basic function of the adhesion unit 22 of the inventive apparatus 1 depicted in Fig. 4 follows the principle as described with respect to the Fig. 1 - 3. It is also possible that the application element 21 is turned in that build material 3 is applied top sides via the build material supply unit 23 and that the application element 21 is subsequently turned.

Build material 3 applied onto the application surface 9 of the application element 21 can be transferred to the application region 7 of the object 2. Therefore, the application element 21 can be pressed onto the object 2 or the build plane 6, respectively. Thus, the layer of build material 3 arranged on the application surface 9 can be "stamped" onto the application region.

Even if not depicted in the Fig., the adhesion unit 10, 20, 22 may be adapted to adjust an adhesion ability for build material 3 of the application surface 9 of the application element 8 by generating a suction stream or a vacuum applied in the region of the application surface 9 of the application element. 8 Hence, build material 3 may be temporarily adhered to the application surface 9 of the application element 8 by a suction stream or a vacuum applied in the region of the application surface 9 of the application element 8. The application surface 9 of the application element 8 may be provided with openings (not shown), e.g. arranged in an array or the like, so that the suction stream or vacuum, respectively may interact with the build material 3 so that the build material 3 may adhere to the application surface 9. The suction stream or vacuum, respective may be generated by a suction stream generating unit (not shown), e.g. a suction pump, or a vacuum generating unit (not shown), e.g. a vacuum pump, assigned to the adhesion unit 10, 20, 22. Operation of a respective a suction stream generating unit or vacuum generating unit, respectively and respective operational parameters, particularly operational parameters which influence the adhesion generated by the suction stream or vacuum, respectively can be controlled by a control unit (not shown) of the suction stream generating unit or vacuum generating unit, respectively.

## Claims

1. An apparatus (1) for additively manufacturing three-dimensional objects (2) by means of successive irradiation and consolidation of layers of a build material (3) which can be consolidated by means of an energy beam, the apparatus comprising:
a process chamber;
an irradiation device configured output an energy beam to selectively irradiate sequential layers of build material; and
an application unit (4) comprising an application element (8, 21) and an adhesion unit (10, 20, 22),
wherein the application element comprises an application surface, and wherein the application element is configured to transfer build material previously applied onto the application surface to an application region of a build plane (5), the build plane comprising a build plate or a previously applied layer of build material,
wherein the adhesion unit is configured to adjust an adhesion ability of the application surface of the application element and/or an adhesion ability of build material, for build material to temporarily adhere the application surface, **characterized in that** the build material temporarily adhering to the application surface at least in part by a suction stream or a vacuum applied in a region of the application surface of the application element.

2. The apparatus of claim 1, comprising:
a suction or vacuum generating unit configured to provide the suction stream or the vacuum in the region of the application surface (9) of the application element (8, 21).

3. The apparatus of claim 1 or 2, wherein the adhesion unit (22) is configured to selectively increase the adhesion ability of the application surface (9) of the application element (21) in at least one transfer region of the application element corresponding to the application region; and/or wherein the adhesion unit is configured to selectively decrease the adhesion ability of the application surface of the application element in at least one region of the application element corresponding to the application region.

4. The apparatus of any one of claims 1 to 3, wherein the adhesion ability of the application surface is passively adjustable via a contact pressure and/or a residual heat of a previously irradiated layer of build material.

5. The apparatus of any one of claims 1 to 4, wherein the adhesion unit is configured to adjust the adhesion ability of the application surface actively via charging, magnetizing, bonding, and/or heating.

6. The apparatus of any one of claims 1 to 5, wherein the application region corresponds to a cross section of a respective layer of a three-dimensional object and/or a one support structure being built.

7. The apparatus of any one of claims 1 to 6, wherein the application element has a plate-like shape or a rotational symmetric shape.

8. The apparatus of any one of claims 1 to 7, wherein the application element is configured to selectively apply build material by way of a rollover movement of the application element, wherein the application element is moveable relative to the build plane.

9. The apparatus of any one of claims 1 to 8, comprising:
a build material supply unit (11) configured to apply build material onto the application element, the application element being moveably arranged with respect to the build material supply unit.

10. The apparatus of any one of claims 1 to 9, wherein the application unit is configured to adjust a layer thickness of one or more layers of build material applied on the application surface and/or on the application region, the layer thickness being adjustable based on at least one application parameter.

11. The apparatus of claim 10, wherein the at least one application parameter corresponds to:
a contact pressure between the application element and the application region;
a contact pressure between the application element and a build material supply unit configured to apply build material onto the application element; and/or
a rotational speed of the application element.

12. The apparatus of any one of claims 1 to 11, comprising:
a conditioning unit (17) configured to condition and/or clean the application surface of the application element.

13. A method of additively manufacturing a three-dimensional object, the method comprising:
applying build material previously onto an application surface of an application element, the application element defining a portion of an application unit for an apparatus for additively manufacturing a three-dimensional object;
adjusting an adhesion ability of the application surface of the application element and/or an adhesion ability of build material, for build material to temporarily adhere the application surface, the build material temporarily adhering to the application surface at least in part by a suction stream or a vacuum applied in a region of the application surface of the application element; and
transferring the build material from the application surface to an application region of a build plane, the build plane comprising a build plate or a previously applied layer of build material.

14. The method of claim 13, comprising:
selectively increasing the adhesion ability of the application surface of the application element in at least one transfer region of the application element corresponding to the application region; and/or
selectively decrease the adhesion ability of the application surface of the application element in at least one region of the application element corresponding to the application region.

15. The method of claim 13 or 14, comprising:
passively adjusting the adhesion ability of the application surface at least in part by a contact pressure and/or a residual heat of a previously irradiated layer of build material; and/or
actively adjusting the adhesion ability of the application surface at least in part by charging, magnetizing, bonding, and/or heating.

## Patentansprüche

1. Vorrichtung (1) zum additiven Fertigen von dreidimensionalen Objekten (2) durch sukzessives Bestrahlen und Verfestigen von Schichten eines Baumaterials (3), die mittels eines Energiestrahls verfestigt werden können, wobei die Vorrichtung aufweist:
eine Prozesskammer;
eine Bestrahlungsvorrichtung, die konfiguriert ist, einen Energiestrahl auszugeben, um selektiv aufeinanderfolgende Schichten von Baumaterial zu bestrahlen; und
eine Auftragseinheit (4), aufweisend ein Auftragselement (8, 21) und eine Hafteinheit (10, 20, 22),
wobei das Auftragselement eine Auftragsfläche aufweist, und wobei das Auftragselement konfiguriert ist, um zuvor auf die Auftragsfläche aufgetragenes Baumaterial zu einem Auftragsbereich einer Bauebene (5) zu übertragen, wobei die Bauebene eine Bauplatte oder eine zuvor aufgetragene Schicht von Baumaterial aufweist,
wobei die Adhäsionseinheit konfiguriert ist, eine Adhäsionsfähigkeit der Auftragsfläche des Auftragselements und/oder eine Adhäsionsfähigkeit von Baumaterial einzustellen, damit Baumaterial vorübergehend an der Auftragsfläche haftet,
**dadurch gekennzeichnet, dass**
das Baumaterial an der Auftragsfläche zumindest teilweise durch einen in einem Bereich der Auftragsfläche des Auftragselements angelegten Saugstrom oder einen Unterdruck vorübergehend anhaftet.

2. Vorrichtung nach Anspruch 1, aufweisend:
eine Saug- oder Vakuumerzeugungseinheit, die derart konfiguriert ist, dass sie den Saugstrom oder den Unterdruck im Bereich der Auftragsfläche (9) des Auftragselements (8, 21) bereitstellt.

3. Vorrichtung nach Anspruch 1 oder 2, wobei die Hafteinheit (22) konfiguriert ist, die Haftfähigkeit der Auftragsfläche (9) des Auftragselements (21) in zumindest einem Übertragungsbereich des Auftragselements, der dem Auftragsbereich entspricht, selektiv zu erhöhen; und/oder wobei die Hafteinheit konfiguriert ist, die Haftfähigkeit der Auftragsfläche des Auftragselements in zumindest einem Bereich des Auftragselements, der dem Auftragsbereich entspricht, selektiv zu verringern.

4. Vorrichtung nach einem der Ansprüche 1 bis 3, wobei die Haftfähigkeit der Auftragsfläche passiv über einen Anpressdruck und/oder eine Restwärme einer zuvor bestrahlten Schicht aus Baumaterial einstellbar ist.

5. Vorrichtung nach einem der Ansprüche 1 bis 4, wobei die Hafteinheit derart konfiguriert ist, dass sie die Haftfähigkeit der Auftragsfläche aktiv durch Aufladen, Magnetisieren, Verbinden und/oder Erhitzen einstellt.

6. Vorrichtung nach einem der Ansprüche 1 bis 5, wobei der Auftragungsbereich einem Querschnitt einer entsprechenden Schicht eines dreidimensionalen Objekts und/oder einer zu bauenden Stützstruktur entspricht.

7. Vorrichtung nach einem der Ansprüche 1 bis 6, wobei das Auftragselement eine plattenartige Form oder eine rotationssymmetrische Form hat.

8. Vorrichtung nach einem der Ansprüche 1 bis 7, wobei das Auftragselement derart konfiguriert ist, dass es Baumaterial mittels einer Überrollbewegung des Auftragselements selektiv aufträgt, wobei das Auftragselement relativ zu der Bauebene bewegbar ist.

9. Vorrichtung nach einem der Ansprüche 1 bis 8, aufweisend:
eine Baumaterial-Zufuhreinheit (11), die derart konfiguriert ist, dass sie Baumaterial auf das Auftragselement aufträgt, wobei das Auftragselement in Bezug auf die Baumaterial-Zufuhreinheit bewegbar angeordnet ist.

10. Vorrichtung nach einem der Ansprüche 1 bis 9, wobei die Auftragseinheit konfiguriert ist, eine Schichtdicke von einer oder mehrerer Schichten aus Baumaterial einzustellen, die auf der Auftragsfläche und/oder auf dem Auftragsbereich aufgetragen sind, wobei die Schichtdicke basierend auf zumindest einem Auftragsparameter einstellbar ist.

11. Vorrichtung nach Anspruch 10, wobei der zumindest eine Auftragsparameter entspricht:
einem Anpressdruck zwischen dem Auftragselement und dem Auftragsbereich;
einem Anpressdruck zwischen dem Auftragselement und einer Baumaterial-Zufuhreinheit, die derart konfiguriert ist, dass sie Baumaterial auf das Auftragselement aufträgt; und/oder
eine Drehgeschwindigkeit des Auftragselements.

12. Vorrichtung nach einem der Ansprüche 1 bis 11, aufweisend:
eine Aufbereitungseinheit (17), die derart konfiguriert ist, dass sie die Auftragsfläche des Auftragselements konditioniert und/oder reinigt.

13. Verfahren zum additiven Fertigen eines dreidimensionalen Objekts, wobei das Verfahren umfasst:
vorheriges Auftragen von Baumaterial auf eine Auftragungsfläche eines Auftragungselements, wobei das Auftragungselement einen Abschnitt einer Auftragungseinheit für eine Vorrichtung zum additiven Fertigen eines dreidimensionalen Objekts definiert;
Einstellen einer Haftfähigkeit der Auftragungsfläche des Auftragungselements und/oder einer Haftfähigkeit von Baumaterial, damit Baumaterial vorübergehend an der Auftragungsfläche haftet, wobei das Baumaterial zumindest teilweise durch einen Saugstrom oder einen in einem Bereich der Auftragsfläche des Auftragselements angelegten Unterdruck vorübergehend an der Auftragungsfläche anhaftet; und
Übertragen des Baumaterials von der Auftragsfläche zu einem Auftragungsbereich einer Bauebene, wobei die Bauebene eine Bauplatte oder eine zuvor aufgetragene Schicht aus Baumaterial aufweist.

14. Verfahren nach Anspruch 13, umfassend:
selektives Erhöhen der Haftfähigkeit der Auftragsfläche des Auftragselements in zumindest einem Übertragungsbereich des Auftragselements, der dem Auftragsbereich entspricht,; und/oder
selektives Verringern der Haftfähigkeit der Auftragsfläche des Auftragselements in zumindest einem Bereich des Auftragselements, der dem Auftragsbereich entspricht.

15. Verfahren nach Anspruch 13 oder 14, umfassend:
passives Einstellen der Haftfähigkeit der Auftragungsfläche zumindest teilweise durch einen Anpressdruck und/oder eine Restwärme einer zuvor bestrahlten Schicht aus Baumaterial; und/oder
aktives Einstellen der Adhäsionsfähigkeit der Auftragsfläche zumindest teilweise durch Aufladen, Magnetisieren, Verbinden und/oder Erhitzen.

## Revendications

1. Appareil (1) de fabrication additive d'objets tridimensionnels (2) au moyen d'une irradiation successive et d'une solidification de couches d'un matériau de construction (3) qui peut être solidifié au moyen d'un faisceau d'énergie, l'appareil comprenant :
une chambre de traitement ;
un dispositif d'irradiation configuré pour émettre un faisceau d'énergie pour irradier de manière sélective des couches séquentielles de matériau de construction ; et
une unité d'application (4) comprenant un élément d'application (8, 21) et une unité d'adhérence (10, 20, 22),
dans lequel l'élément d'application comprend une surface d'application, et dans lequel l'élément d'application est configuré pour transférer du matériau de construction précédemment appliqué sur la surface d'application vers une zone d'application sur un plan de construction (5), le plan de construction comprenant un panneau de construction ou une couche de matériau de construction précédemment appliquée,
dans lequel l'unité d'adhérence est configurée pour ajuster un pouvoir d'adhérence de la surface d'application de l'élément d'application et/ou un pouvoir d'adhérence du matériau de construction, pour l'adhérence temporaire de matériau de construction à la surface d'application,
**caractérisé en ce que** le matériau de construction adhère de manière temporaire à la surface d'application au moins en partie par un courant d'aspiration ou un vide appliqué dans une zone de la surface d'application de l'élément d'application.

2. Appareil selon la revendication 1, comprenant :
une unité de production d'aspiration ou de vide configurée pour fournir le courant d'aspiration ou le vide dans la zone de la surface d'application (9) de l'élément d'application (8, 21).

3. Appareil selon la revendication 1 ou 2, dans lequel l'unité d'adhérence (22) est configurée pour augmenter de manière sélective le pouvoir d'adhérence de la surface d'application (9) de l'élément d'application (21) dans au moins une zone de transfert de l'élément d'application correspondant à la zone d'application ; et/ou dans lequel l'unité d'adhérence est configurée pour réduire de manière sélective le pouvoir d'adhérence de la surface d'application de l'élément d'application dans au moins une zone de l'élément d'application correspondant à la zone d'application.

4. Appareil selon l'une quelconque des revendications 1 à 3, dans lequel le pouvoir d'adhérence de la surface d'application peut être ajusté de manière passive par l'intermédiaire d'une pression de contact et/ou d'une chaleur résiduelle d'une couche de matériau de construction précédemment irradiée.

5. Appareil selon l'une quelconque des revendications 1 à 4, dans lequel l'unité d'adhérence est configurée pour ajuster de manière active le pouvoir d'adhérence de la surface d'application par l'intermédiaire par charge, magnétisation, collage et/ou chauffage.

6. Appareil selon l'une quelconque des revendications 1 à 5, dans lequel la zone d'application correspond à une section transversale d'une couche respective d'un objet tridimensionnel et/ou d'une structure de support en cours de construction.

7. Appareil selon l'une quelconque des revendications 1 à 6, dans lequel l'élément d'application présente une forme similaire à celle d'un panneau ou une forme symétrique par rotation.

8. Appareil selon l'une quelconque des revendications 1 à 7, dans lequel l'élément d'application est configuré pour appliquer de manière sélective du matériau de construction au moyen d'un déplacement de retournement de l'élément d'application, dans lequel l'élément d'application peut être déplacé par rapport au plan de construction.

9. Appareil selon l'une quelconque des revendications 1 à 8, comprenant :
une unité d'alimentation en matériau de construction (11) configurée pour appliquer du matériau de construction sur l'élément d'application, l'élément d'application étant disposé de manière à pourvoir être déplacé par rapport à l'unité d'alimentation en matériau de construction.

10. Appareil selon l'une quelconque des revendications 1 à 9, dans lequel l'unité d'application est configurée pour ajuster une épaisseur de couche d'une ou de plusieurs couches de matériau de construction appliqué sur la surface d'application et/ou la zone d'application, l'épaisseur de couche pouvant être ajustée sur la base d'au moins un paramètre d'application.

11. Appareil selon la revendication 10, dans lequel l'au moins un paramètre d'application correspond à :
une pression de contact entre l'élément d'application et la zone d'application ;
une pression de contact entre l'élément d'application et une unité d'alimentation en matériau de construction pour appliquer du matériau de construction sur l'élément d'application ; et/ou
une vitesse de rotation de l'élément d'application.

12. Appareil selon l'une quelconque des revendications 1 à 11, comprenant :
une unité de conditionnement (17) configurée pour conditionner et/ou nettoyer la surface d'application de l'élément d'application.

13. Procédé de fabrication additive d'un objet tridimensionnel, le procédé comprenant :
l'application de matériau de construction au préalable sur une surface d'application d'un élément d'application, l'élément d'application définissant une partie d'une unité d'application pour un appareil de fabrication additive d'un objet tridimensionnel ;
l'ajustement d'un pouvoir d'adhérence de la surface d'application de l'élément d'application et/ou d'un pouvoir d'adhérence de matériau de construction pour l'adhérence temporaire de matériau de construction à la surface d'application,
le matériau de construction adhérant de manière temporaire à la surface d'application au moins en partie par un courant d'aspiration ou un vide appliqué dans une zone de la surface d'application de l'élément d'application ; et
le transfert du matériau de construction depuis la surface d'application à une zone d'application d'un plan de construction, le plan de construction comprenant un panneau de construction ou une couche de matériau de construction précédemment appliquée.

14. Procédé selon la revendication 13, comprenant :
l'augmentation sélective du pouvoir d'adhérence de la surface d'application de l'élément d'application dans au moins une zone de transfert de l'élément d'application correspondant à la zone d'application ; et/ou
la réduction sélective du pouvoir d'adhérence de la surface d'application de l'élément d'application dans au moins une zone de l'élément d'application correspondant à la zone d'application.

15. Procédé selon la revendication 13 ou 14, comprenant :
l'ajustement passif du pouvoir d'adhérence de la surface d'application au moins en partie par une pression de contact et/ou une chaleur résiduelle d'une couche de matériau de construction précédemment irradiée ; et/ou
l'ajustement sélectif du pouvoir d'adhérence de la surface d'application au moins en partie par charge, magnétisation, collage et/ou chauffage.
